# EUROPÄISCHE PATENTANMELDUNG

(11) **EP 4 729 918 A1**
(43) Veröffentlichungstag der Anmeldung: **22.04.2026**
(21) Anmeldenummer: 25209472.7
(22) Anmeldetag: 17.10.2025
(51) Int. Cl.: G01N 1/22, G01N 15/06

(54) **MESSSYSTEM UND VERFAHREN ZUR ERMITTLUNG VON PARTIKELEMISSIONEN**

(30) Priorität: 21.10.2024 DE 102024130607; 03.12.2024 DE 102024135915
(71) Anmelder: Deutsches Zentrum für Luft- und Raumfahrt e.V., 53227 Bonn (DE)
(72) Erfinder: Epple, Fabius, 70376 Stuttgart (DE); Reiland, Sven, 71032 Böblingen (DE); Löber, Manuel, 72127 Kusterdingen (DE); Reijrink, Nina, 70597 Stuttgart (DE); Philipps, Franz, 70199 Stuttgart (DE); Celenlioglu, Melis Seren, 20133 Milano (IT)
(74) Vertreter: Fleck, Julia Maria

(57) **Zusammenfassung**

Die Erfindung betrifft ein Messsystem (1) zur Ermittlung von Partikelemissionen, die von einem eine Radmittelachse (M) aufweisenden Fahrzeugrad (2) ausgehen, mit einer Messanordnung (5, 6) umfassend
- eine entlang einer Längsachse (L) verlaufende Sammelleitung (44) zur Leitung einer gesammelten Gasströmung an eine Probenentnahmevorrichtung (46),
- eine Kollektorvorrichtung (20) mit einem Strömungskanal (27) zur Sammlung und Überführung der Gasströmung aus einem Bereich an dem Fahrzeugrad (2) auf die Sammelleitung (44), und
- die Probenentnahmevorrichtung (46) umfassend zumindest eine Probenentnahmeleitung (51) und eine dieser zugeordneten Probenentnahmesonde (48) mit einer eintrittsseitigen Entnahmeöffnung (50) zur Probenentnahme aus der Gasströmung innerhalb der Sammelleitung (44) und zur Leitung der entnommenen Proben an eine Analyseanordnung (58).

Eine optimierte Ermittlung von Partikelemissionen ist dadurch erreichbar, dass die Kollektorvorrichtung (20) auf das Fahrzeugrad (2) abgestimmt ist, wobei die Eintrittsöffnung (24) eine Höhe (hb) aufweist, die mindestens 20 %, vorzugsweise mindestens 25 % einer Höhe (hd) des Fahrzeugrads (2) entspricht, wobei insbesondere die Höhe (hb) größer ist als eine Breite der Eintrittsöffnung (24)

## Beschreibung

Die Erfindung betrifft ein Messsystem und ein Verfahren zur Ermittlung von Partikelemissionen, die von einem eine Radmittelachse aufweisenden Fahrzeugrad ausgehen, mit einer Messanordnung umfassend
- eine entlang einer Längsachse verlaufende Sammelleitung zur Leitung einer gesammelten Gasströmung an eine Probenentnahmevorrichtung,
- eine Kollektorvorrichtung mit einem Strömungskanal zur Sammlung und Überführung der Gasströmung aus einem Bereich an dem Fahrzeugrad auf die Sammelleitung, mit einer Eintrittsöffnung zur Ausrichtung in Richtung des Fahrzeugrades, mit einer sammelleitungsseitigen Austrittsöffnung, die vorzugsweise zumindest im Wesentlichen deckungsgleich mit einem Strömungsquerschnitt der Sammelleitung an dieser, vorzugsweise lösbar, befestigbar oder befestigt ist, und mit einer untergrundseitigen Unterseite, und
- die Probenentnahmevorrichtung umfassend zumindest eine Probenentnahmeleitung und eine dieser zugeordneten Probenentnahmesonde zur Probenentnahme aus der Gasströmung innerhalb der Sammelleitung und zur Leitung der entnommenen Proben an eine Analyseanordnung.

Ein Messsystem dieser Art zur Messung von Reifenabrieb ist in der Veröffentlichung "Philipps, Franz; Schripp, Tobias; Reiland, Sven; Bondorf, Linda; Löber, Manuel; Holtmann, Christoph (2023): ZEDU1 - Zero Emission Drive Unit Generation 1: Abschlussbericht. Projektbericht DLR. 209 S." angegeben.

Weiterhin sind Messsysteme aus folgender Nichtpatentliteratur bekannt:
- Bondorf, Linda; Köhler, Lennart; Grein, Tobias; Epple, Fabius; Philipps, Franz; Aigner, Manfred; Schripp, Tobias (2023): Air-borne brake wear emissions from a battery-electric vehicle. Atmosphere, 14, Seite 488. Multidisciplinary Digital Publishing Institute (MDPI). doi: 10.3390/atmos14030488 https://doi.orq/10.3390/atmos14030488; ISSN 2073-4433,
- Bondorf, Linda; Grein, Tobias; Köhler, Lennart; Philipps, Franz; Schripp, Tobias (2022): On-board measurement of ultrafine non-exhaust particulate emissions from a battery electric vehicle. European Federation of Clean Air and Environmental Protection Associations Symposium (EFCA), 05.-06.07.2022, Brussels, Belgium,
- Philipps, Franz; Bondorf, Linda; Reiland, Sven (2023): ZEDU-1: Mobilität ohne Feinstaubemissionen aus Brems- und Reifenabrieben - Bremsabriebsemissionen eines batterieelektrischen Fahrzeugs; (Mess-) Konzepte und Ergebnisse. In: AVL-TechDay Brake Weare. AVL TechDay Brake Wear, 07.03.2023, Worms, und
- Philipps, Franz; Bondorf, Linda; Epple, Fabius (2022): ZEDU-1 Zero Emission Drive Unit Phase 1: Mobilität für morgen Mobilität ohne Feinstaubemissionen aus Brems- und Reifenabrieben - (Mess-) Konzepte und erste Ergebnisse. TechDay Brake Wear, 05.07.2022, Sindelfingen.

Die DE 10 2017 006 349 A1 zeigt eine Vorrichtung zur Messung, welche eine Radumhausung, eine Filtereinheit sowie eine Messstrecke umfasst. Die Umhausung umschließt die Radbremse abdichtend und weist eine Einlassöffnung zur Zuführung von Zuluft sowie eine Auslassöffnung zur Ausführung von emissionsbeladener Abluft aus der Umhausung auf. Die Filtereinheit ist der Einlassöffnung zur Filterung der Zuluft zugeordnet. Die Messstrecke weist eine Abluftleitung, eine Messsonde und eine Volumenstrommessvorrichtung auf. Die emissionsbeladene Abluft wird in die Abluftleitung eingeleitet und mittels der Messsonde wird ein Teilvolumenstrom der emissionsbeladenen Abluft entnommen. Der Teilvolumenstrom wird der Volumenstrommessvorrichtung zugeführt.

Radeinhausungen für Fahrzeuge, zur Partikelsammlung zum Zwecke der Emissionsreduktion, sind in der DE 10 2021 006 535 A1, der DE 10 2021 107 506 B9 und der DE 10 2019 133 794 B4 angegeben.

Die DE 10 2016 215 900 A1, die DE 10 2019 204 743 A1, die DE 10 2024 100 298 A1 und die DE 10 2022 104 215 A1 offenbaren weitere Verfahren und/oder Systeme zur Ermittlung und/oder Verminderung von Reifenemissionen.

Der Erfindung liegt die Aufgabe zugrunde, eine Messeinrichtung sowie ein Verfahren zur Ermittlung von Partikelemissionen bereitzustellen, welche eine optimierte Messung von Reifenabrieb ermöglichen.

Die Aufgabe wird für das Messsystem mit den Merkmalen des Anspruchs 1 und für das Verfahren mit den Merkmalen des Anspruchs 17 gelöst.

Bei dem Messsystem ist erfindungsgemäß vorgesehen, dass die Kollektorvorrichtung auf das Fahrzeugrad abgestimmt ist, wobei die Eintrittsöffnung eine Höhe aufweist, die mindestens 20 %, vorzugsweise mindestens 25 % einer Höhe des Fahrzeugrads (entsprechend dessen Durchmesser) entspricht, wobei insbesondere die Höhe größer ist als eine axiale Breite (Maß in axialer Richtung) der Eintrittsöffnung.

Die Gasströmung ist insbesondere durch eine Luftströmung gebildet.

Der Bereich an dem Fahrzeugrad, aus dem die Gasströmung abgeführt wird, ist insbesondere ein für die Partikelsammlung günstiger Bereich, wie auch im Zusammenhang mit nachfolgenden Merkmalen erläutert.

Die Sammelleitung ist insbesondere als gerades, zylindrisches Rohr ausgebildet, wobei die Längsachse eine Mittellängsachse bzw. Symmetrieachse bildet.

Die Probenentnahmesonde ist ein starr ausgebildeter Teil der Probenentnahmeleitung, der in die Sammelleitung hineinragt.

Die Höhe hb bezeichnet den geraden Abstand zwischen einer unteren (untergrundseitigen) Kante der Eintrittsöffnung zu einer gegenüberliegenden oberen Kante. Die Höhe entspricht insbesondere dem Maß der Sehne des Kreissegments mit einem Öffnungswinkel α, über welchen sich die Eintrittsöffnung erstreckt, d. h. hb = sin(0,5* α)*(hd+2s).

Vorzugsweise ist die Eintrittsöffnung dabei zumindest im Wesentlichen (z. B. abgesehen von abgerundeten Ecken und/oder leicht geschwungenen Kanten) viereckig ausgebildet.

Mittels der vergleichsweisen großen Höhe der Eintrittsöffnung, vorzugsweise (nahezu) über die gesamte (axiale) Breite des Fahrzugrads, kann vorteilhaft ein Großteil der von dem Fahrzeugrad emittierten Partikel mittels der Kollektorvorrichtung aus dem Bereich des Fahrzeugrads transportiert und messtechnisch erfasst werden, auch solche, die z. B. aufgrund ihrer Größe und/oder Trägheit nicht vollständig der Luftströmung folgen. Auf diese Weise wird die Messgenauigkeit einer Messung des Reifenabriebs deutlich optimiert.

Eine günstige Position hinsichtlich einer erwarteten Partikelflugrichtung besteht darin, dass die Kollektorvorrichtung derart angeordnet ist, dass sich die Eintrittsöffnung während der Messung (großteils, vorzugsweise vollständig) in einem bezüglich einer Fahrzeugvorderseite radrückseitigen, untergrundseitigen Quadranten des Fahrzeugrads befindet, wobei sich die Kollektorvorrichtung mit der Eintrittsöffnung in Umlaufrichtung um die Radmittelachse über einen Öffnungswinkel erstreckt. Der Öffnungswinkel beträgt beispielsweise mindestens 30° oder 35°, vorzugsweise maximal 45°.

Eine vorteilhafte Dimensionierung der Sammelleitung zugunsten repräsentativer Messungen besteht darin, dass ein Durchmesser der Sammelleitung (oder ein äquivalentes Maß) zumindest 30 %, vorzugsweise zumindest 50 % der Höhe der Eintrittsöffnung beträgt.

Um eine übermäßige Strömungsbeeinflussung bei der Probenentnahme zu vermeiden ist vorzugsweise vorgesehen, dass innerhalb der Sammelleitung ein freier Strömungsquerschnitt im Bereich der zumindest einen Probenentnahmesonde (innerhalb des axialen Abschnitts, in welchem die Probenentnahmesonde innerhalb der Sammelleitung angeordnet ist) zumindest 50 % eines freien Strömungsquerschnitts im Bereich stromauf der Probenentnahmesonde (innerhalb des axialen Abschnitts in der Sammelleitung, in welchem die Probenentnahmesonde nicht angeordnet ist) beträgt.

Zur Reduktion von Partikelverlusten innerhalb des Messsystems trägt vorteilhaft bei, wenn die zumindest eine Probenentnahmeleitung eine Leitungslänge von der Entnahmeöffnung bis an die Analyseanordnung von maximal 1 m und/oder einen Strömungsdurchmesser von mindestens 10 mm und vorzugsweise maximal 18 mm aufweist. Dabei ist der Strömungsdurchmesser vorzugsweise zumindest im Wesentlichen (beispielsweise mit Abweichung von bis zu 10 %) innerhalb der Probenentnahmeleitung konstant. Die Außenwände sind vorzugsweise möglichst dünn ausgebildet, jedoch derart, dass sie eine ausreichende mechanische Stabilität gewährleisten.

Zugunsten repräsentativer Messungen ist insbesondere vorgesehen, dass die zumindest eine Probenentnahmesonde, vorzugsweise eine Gruppe von Probenentnahmesonden, innerhalb der Sammelleitung parallel zu der Längsachse (L) und/oder in einem Querschnitt (orthogonal zur Längsachse) durch die Sammelleitung symmetrisch zu der Längsachse angeordnet ist. In dem Querschnitt entspricht insbesondere der Mittelpunkt des Düsenmusters dem Mittelpunkt der Sammelleitung. Bevorzugt weisen zudem die Probeentnahmesonden einen Mindestabstand zu den Innenwänden der Sammelleitung und/oder zu benachbarten Probenentnahmesonde auf, derart, dass sich die Entnahmeöffnungen außerhalb der Grenzschichten der Gasströmung befinden. Die Auslegung kann insbesondere mittels computergestützter Strömungssimulation erfolgen.

Zum Erhalt einer zumindest im Wesentlichen voll ausgebildeten Rohrströmung an dem Ort der Probenentnahme ist vorzugsweise vorgesehen, dass die zumindest eine Entnahmeöffnung in einer (orthogonal zu der Längsachse verlaufenden) Messebene angeordnet ist, die eine axiale Position bezüglich der Längsachse mit einem Abstand von zumindest 1 x di (mit di = (Strömungs-)Durchmesser der Sammelleitung), vorzugsweise zumindest 1,5 x di oder zumindest 2 x di, von der Austrittsöffnung aufweist.

Vorzugsweise zweigt stromab der Entnahmeöffnung (insbesondere der Messebene) eine Ableitung von der Sammelleitung ab oder die Sammelleitung geht in selbige über, zur Abführung der restlichen Gasströmung nach Probenentnahme stromab der Entnahmeöffnung, wobei ein Umlenkwinkel der Strömungsumlenkung zwischen der Sammelleitung und der Ableitung (bzgl. deren Längsachsen) z. B. zwischen (jeweils einschließlich) 30° und 90° beträgt. Vorzugsweise ist im axialen Bereich der Strömungsumlenkung, z. B. über zumindest einen Großteil des Strömungsquerschnitts der Sammelleitung, ein Umlenkelement (insbesondere umfassend Durchführungen für die Probenentnahmesonde/n) angeordnet, welches auf der im Betrieb überströmten Seite eine an den Umlenkwinkel angepasste schräge und/oder gekrümmte Strömungsleitfläche aufweist. Der axiale Abstand der Strömungsumlenkung von der Entnahmeöffnung bzw. Messebene beträgt vorzugsweise zumindest 0,5-mal, zumindest 1-mal oder zumindest 1,5-mal dem Strömungsdurchmesser di der Sammelleitung, um einen Einfluss von Einlaufeffekten an der Strömungsumlenkung auf die Probeentnahme zu vermeiden. Durch die Beabstandung und/oder das Umlenkelement wird eine verwirbelungsarme bzw. -freie Strömungsumlenkung unterstützt, wodurch die isokinetischen Bedingungen bei der Probenentnahme zumindest im Wesentlichen aufrechterhalten werden können. Das Umlenkelement ist insbesondere additiv gefertigt.

Zugunsten repräsentativer Messungen sind bei Vorhandensein mehrerer Probeentnahmesonden die Entnahmeöffnungen vorzugsweise auf der gleichen axialen Position, in der Messebene, angeordnet und/oder die Mittelpunkte unmittelbar zueinander benachbarter Entnahmeöffnungen äquidistant zueinander angeordnet. Die Messebene kann zur Anpassung an die Messaufgabe, beispielsweise unter geänderten Randbedingungen oder Vermessung eines anderen Fahrzeugrades, axial verschieblich sein. Eine zweckmäßige Anzahl an Probenentnahmesonden ist beispielsweise vier oder fünf, wobei die Mittelpunkte beispielsweise in einem quadratischen oder pentagonförmigen Muster angeordnet sind.

Vorzugsweise ist die Kollektorvorrichtung möglichst dicht an dem Fahrzeugrad angeordnet, wobei das Messsystem das Fahrzeugrad umfasst, wobei die Kollektorvorrichtung einen (insbesondere zumindest im Wesentlichen konstanten, beispielsweise um maximal +/- 5 mm abweichenden) radialen Abstand von einer radial außenseitigen Lauffläche des Fahrzeugrads von 10 mm ≤ s ≤ 150 mm, vorzugsweise von 50 mm ≤ s ≤ 100 mm, z. B. 65 mm, aufweist. Auf diese Weise ist der radiale Abstand für eine möglichst vollständige Partikelsammlung möglichst gering, jedoch ausreichend groß, um einen Kontakt zwischen der Kollektorvorrichtung und dem Fahrzeugrad im Betrieb zu vermeiden.

Vorzugsweise weist das Messsystem eine Wärmeerfassungseinrichtung, insbesondere eine Wärmebildkamera, zur Erfassung eines Wärmebildes an dem Fahrzeugrad (vorzugsweise über einen Großteil der oder der gesamten Reifenbreite bzw. Lauffläche) auf. Die Wärmebildkamera dient beispielsweise der Kontrolle der Reifenabnutzung und/oder der Identifikation von Spur- und/oder Sturzfehlstellungen.

In einer bevorzugten Ausbildungsvariante ist die Kollektorvorrichtung konisch und/oder strömungsgünstig geformt, mit insbesondere stetigen, abgerundeten Flächenverläufen und/oder ohne Strömungsablösungen induzierenden Vorsprüngen, ausgebildet, um eine Ausbildung einer zumindest im Wesentlichen voll ausgebildeten Rohrströmung zu unterstützen. Alternativ oder zusätzlich ist ein Strömungskanal der Kollektorvorrichtung zumindest mit der Unterseite (und vorzugsweise mit der Mittelachse), insbesondere über seine gesamte Länge, in Strömungsrichtung schräg nach oben, von einem Untergrund wegführend, ausgerichtet. Die Optimierung hinsichtlich eines günstigen Strömungsverlaufes erfolgt insbesondere mittels computergestützter Strömungssimulation. Auf diese Weise wird bei gleichzeitig kompakter Ausbildung der Kollektorvorrichtung die Entstehung einer voll, oder zumindest weitgehend, ausgebildeten Rohrströmung innerhalb der Sammelleitung über eine möglichst kurze Strecke vorteilhaft unterstützt.

Zur Sammlung größerer Partikel, die nicht vollständig mit der Strömung mitgetragen werden, kann vorteilhaft vorgesehen sein, dass an der Unterseite der Kollektorvorrichtung ein Reservoir angeordnet ist, welches vorzugsweise derart verschließbar ist, dass der Wandungsverlauf der Unterseite zumindest im Wesentlichen stetig ist, wobei zumindest im Wesentlichen keine Kavität gebildet ist. Der Verschluss kann beispielsweise mittels eines von unten eingeschobenen Einsatzes gebildet sein. Auf diese Weise wird bei Messungen ohne Einsatz des Reservoirs eine gleichmäßigere Strömungsführung innerhalb des Strömungskanals erreicht.

Zur Sicherstellung isokinetischer Messbedingungen (mit Geschwindigkeitsabweichung von maximal 20 %) über den möglichst vollständigen Messbetrieb weist vorzugsweise das Messsystem eine Gasfördereinrichtung zur Förderung der Gasströmung auf, die insbesondere stromab der Entnahmeöffnung in einer Ableitung der Gasströmung nach der Probenentnahme angeordnet ist, wobei die Gasfördereinrichtung auf eine Gasgeschwindigkeit innerhalb der Sammelleitung oder eine damit in Zusammenhang stehende Größe (mittels einer Steuereinrichtung) regelbar oder geregelt ist. Zu diesem Zweck wird vorzugsweise die Geschwindigkeit innerhalb der Sammelleitung, beispielsweise mittels eines Anemometers, gemessen. Zur Nachregelung der Geschwindigkeit innerhalb der Probenentnahmeleitung z. B. mittels einer darin befindlichen (weiteren) Gasfördereinrichtung, beispielsweise einer Vakuumpumpe, kann in der oder den Probenahmeleitung/en eine Einrichtung zur Messung des Massenstromes der Gasprobe vorhanden sein.

In einer auf die möglichst vollständige Erfassung von Partikelemissionen optimierte Ausbildungsvariante weist das Messsystem eine Einhausung auf, an der die Kollektorvorrichtung, vorzugsweise lösbar, befestigt ist, wobei die Einhausung in montiertem Zustand das Fahrzeugrad und einen Sammelraum weitgehend umschließt, aufweisend eine sich radial bezüglich der Radmittelachse erstreckende, außenseitige Deckwandung und eine sich an die Deckwandung anschließende, in Umlaufrichtung um die Radmittelachse verlaufende Umfangswandung, wobei in der Umfangswandung eine untergrundseitige Öffnung angeordnet ist, durch welche das Fahrzeugrad mit einem Untergrund in Kontakt stehen kann (bzw. in montiertem Zustand in Kontakt steht), und wobei in der Umfangswandung eine Kollektoröffnung vorhanden ist, durch welche die mit den Emissionen beladene Gasströmung aus dem Sammelraum in die Kollektorvorrichtung abführbar oder abgeführt ist, wobei die Eintrittsöffnung in montiertem Zustand über der Kollektoröffnung befestigt ist und/oder vorzugsweise zumindest im Wesentlichen deckungsgleich mit der Kollektoröffnung oder kleiner ausgebildet ist. Die Einhausung ist dabei derart ausgebildet, dass eine nicht Fahrzeugbremse umfasst, sondern beispielsweise getrennt gekapselt ist. Auf diese Weise ist sichergestellt, dass ausschließlich von dem Fahrzeugrad emittierte Partikel, nicht von der Bremse emittierte Partikel, mittels der Einhausung gesammelt werden.

Vorzugsweise ist die Einhausung derart ausgebildet, dass die Umfangswandung den (vorzugsweise im Wesentlichen konstanten, beispielsweise mit Abweichungen von maximal +/- 5 mm) radialen Abstand von der radial außenseitigen Lauffläche des Fahrzeugrads mit 10 mm ≤ s ≤ 150 mm, vorzugsweise mit 50 mm ≤ s ≤ 100 mm, z. B. 65 mm, aufweist und/oder dass an untergrundseitigen Enden der Einhausung, die die untergrundseitige Öffnung umgrenzen, zumindest ein Endelement lösbar befestigt oder befestigbar ist. Die Endelemente sind vorzugsweise an den Längsseiten und den Querseiten der untergrundseitigen Öffnung angeordnet und/oder insbesondere aus einem anderen Material als die Deckwandungen und/oder die Umfangswandung, insbesondere elastisch verformbar ausgebildet. Die Endelemente verringern den Abstand zwischen der Einhausung und dem Untergrund, wobei sie bei Unebenheiten des Untergrundes aufgrund ihrer Elastizität nachgeben können und so eine Beschädigung der gesamten Einhausung vermieden wird. Die Endelemente stellen eine Art "Opferelemente" dar, die aufgrund der lösbaren Befestigung nach Verschleiß einfach getauscht werden können. Mittels der Endelemente erfolgt eine verbesserte, weitgehende Trennung der Luftströmung innerhalb der Einhausung zu der Umgebungsluft.

In einer bevorzugten Ausbildungsvariante ist vorgesehen, dass an der Umfangswandung weiterhin eine Adapteröffnung angeordnet ist, die vorzugsweise in einem oberen, besonders bevorzugt einem bezüglich einer Fahrzeugvorderseite radvorderseitigen Quadranten bezüglich der Radmittelachse angeordnet ist.

Dabei kann an der Adapteröffnung eine Funktionseinheit lösbar befestigbar oder befestigt sein, wobei die Funktionseinheit aufweist oder gebildet ist durch zumindest: eine Gas-Zufuhrdüse, eine Partikel-Zugabevorrichtung und/oder eine Messeinrichtung und/oder die Wärmeerfassungseinrichtung.

In einer bevorzugten Ausbildungsvariante ist vorgesehen, dass die Eintrittsöffnung und/oder die Kollektoröffnung und/oder die Adapteröffnung sich in axialer Richtung bezüglich der Radmittelachse über mehr als 70 % der Breite, vorzugsweise zwischen 80 % bis 95 % der Breite der Umfangswandung und/oder des Fahrzeugrads erstreckt/erstrecken, und vorzugsweise zumindest im Wesentlichen viereckig ausgebildet ist/sind.

In einer insbesondere zur Vergleichbarkeit unterschiedlicher Messmethoden vorteilhaften Ausbildung des Messsystems kann vorgesehen sein, dass zwei Messanordnungen vorhanden sind, wobei eine der Messanordnungen eine Einhausung umfasst und die andere der Messanordnungen keine Einhausung umfasst, mittels welcher (insbesondere in einer Art Kalibrierbetrieb des Messbetriebs) der gleiche Messbetrieb (bei gleichen Randbedingungen und gleichen Fahrzyklen) durchführbar oder durchgeführt ist, wobei vorzugsweise beide Messanordnungen in demselben Messbetrieb simultan, jeweils eine an einem der Fahrzeugräder insbesondere desselben Fahrzeuges, einsetzbar oder eingesetzt sind. Dabei sind insbesondere die Messanordnungen abgesehen von der Einhausung vorzugsweise hinsichtlich der Anordnung und Ausbildung der Komponenten vergleichbar bzw. der Ausbildung nach identisch. Vorzugsweise weisen beide Messanordnungen eine separate, jedoch gleich ausgebildete Analyseanordnung auf. Die beiden Messungen, mit jeweils den beiden unterschiedlichen Messanordnungen, werden vorzugsweise miteinander verglichen und auf diese Weise z. B. Rückschlüsse über die Vergleichbarkeit zwischen der Messung mit Einhausung und der Messung ohne Einhausung gezogen. Diese Rückschlüsse können quantifiziert werden, z. B. unter Ermittlung eines Korrekturfaktors oder mehrerer Korrekturfaktoren, mittels welchem/welcher auch aus Messungen ausschließlich ohne Einhausung mit solchen mit Einhausung verglichen werden können.

Zur Vermeidung elektrostatischer Aufladungen sind zumindest während des Messbetriebs mit der Gasströmung in Kontakt stehende Wandflächen aus elektrisch leitfähigem Material, insbesondere Metall und/oder elektrisch leitfähigem Kunststoff, ausgebildet. Dies betrifft insbesondere die Hauptkomponenten wie (gegebenenfalls) die Einhausung, die Kollektorvorrichtung, die Sammelleitung und die Probenentnahmeleitung. Diese Ausbildung verhindert vorteilhaft eine mit der elektrostatischen Aufladung einhergehende Beeinflussung des Partikeltransports und Verfälschung der Messung.

Bei dem erfindungsgemäßen Verfahren zur Ermittlung von Partikelemissionen, die von einem Fahrzeugrad ausgehen, werden in einem Messbetrieb Partikelemissionen (insbesondere Reifenabrieb) mittels zumindest einer Messanordnung eines Messsystems, das nach einem der vorhergehenden Ansprüche ausgebildet ist, ermittelt. Dabei rollt in zumindest einem Fahrzyklus das Fahrzeugrad auf einem Untergrund ab, wobei aus einem Bereich an dem Fahrzeugrad eine Gasströmung mittels einer Kollektorvorrichtung gesammelt, insbesondere angesaugt, wird und in eine Sammelleitung überführt wird, wobei innerhalb der Sammelleitung mittels zumindest einer Probenentnahmesonde eine Probe aus der Gasströmung entnommen und an eine Analyseanordnung geleitet wird. Insbesondere bei Messungen mit der Einhausung erfolgt der Messbetrieb an einem ungelenkten Reifen, z. B. einem Hinterreifen eines Fahrzeuges.

Zur Qualitätssicherung werden insbesondere innerhalb eines Messbetriebs mehrere, vorzugsweise mindestens fünf, z. B. acht, Fahrzyklen hintereinander durchgeführt, wobei vorzugsweise als Startbedingung für einen einzelnen Fahrzyklus eine Temperatur des Fahrzeugrades eine definierte Starttemperatur unterschreitet. Die definierte Starttemperatur hängt insbesondere von den Randbedingungen ab, beispielsweise von dem Reifentyp und/oder von saisonalen Bedingungen. Bei dem Fahrzyklus kann es sich um einen Standard-Fahrzyklus, beispielsweise um den WLTC(Worldwide harmonized Light Duty Test Cycle)-Zyklus handeln. Möglich ist auch die Definition eines speziellen Fahrzyklus, z. B. um das Abriebverhalten bei bestimmten Betriebsbedingungen (z. B. unter vermehrtem Einsatz von Bremsen und/oder bei Konstantfahrten) zu vergleichen.

Vorteilhaft kann sein, wenn der Messbetrieb unter kontrollierten Umgebungsbedingungen, vorzugsweise auf einem (Rollen-)Prüfstand in einer Klimakammer, durchgeführt wird,
- bei einer definierten Temperatur, die insbesondere zwischen 18 °C und 28 °C, vorzugsweise zwischen 22 °C und 24 °C, beträgt und/oder
- bei einer definierten Luftfeuchtigkeit, die insbesondere zwischen 40 % und 60 %, vorzugsweise zwischen 48 % und 52 %, beträgt und/oder
- bei einem definierten Maximalpartikelgehalt der Umgebungsluft, der insbesondere maximal 600 Partikel pro cm³, vorzugsweise maximal 300 Partikel pro cm³ beträgt.

Der maximale Partikelgehalt kann insbesondere mittels eines Luftreinigers erhalten werden.

Insbesondere in diesem Zusammenhang kann bevorzugt der Messbetrieb auf einer definierten Oberfläche eines Untergrundes, insbesondere einer Rolle eines Rollenprüfstandes, durchgeführt werden, um eine definierte Reibpaarung mit einer reproduzierbaren Abreibung zu erhalten. Dabei kann beispielsweise die Rolle mit einer Schleifpapierähnlichen Beschichtung (mit definierter Körnung) versehen werden.

Vorzugsweise wird/werden in einem separaten Charakterisierungsbetrieb, bevorzugt unter den gleichen Randbedingungen (bei gleichem Messsystem-Aufbau und Umgebungsbedingungen), und/oder simultan während des Messbetriebs, eine Hintergrundpartikelkonzentration und/oder eine Partikelanzahl und/oder eine Partikelsammlungs- und/oder -transporteffizienz und/oder eine Verdünnung und/oder zumindest eine Temperatur des Fahrzeugrads ermittelt. Zur Bestimmung der Partikelanzahl und/oder Partikelsammlungs- und/oder -transporteffizienz und/oder der Verdünnung wird insbesondere in dem Charakterisierungsbetrieb mittels eines Partikelgenerators, beispielsweise eines Silberpartikelgenerators, eine definierte Menge an Partikeln innerhalb einer definierten Strömung (d. h. eine definierte Anzahl an Partikeln pro cm³) in das Messsystem (z. B. über die Adapteröffnung an der Einhausung) zugegeben, im Stillstand und/oder ohne Lastaufnahme des Fahrzeugrads, und mittels der Analyseanordnung deren Anzahl pro cm³ erfasst. Daraus wird ermittelt, wie viele Partikel auf dem Transportweg bis zur Messebene verloren gehen (Partikeltransporteffizienz) und wie viele Partikel mittels des Messsystems gesammelt und erfasst werden (Partikelsammlungseffizienz). Zur Bestimmung der Verdünnung wird ein Zuwachs an Gasstrom innerhalb des Messsystems (insbesondere ohne Partikelzugabe) ermittelt. Die Hintergrundpartikelkonzentration entspricht einem in der Umgebung des Fahrzeugrads (z. B. innerhalb einer Klimakammer) vorliegenden Partikelgehalt, welcher insbesondere mittels eines (von dem Messsystem) separaten Geräts außerhalb oder innerhalb Einhausung, z. B. nahe des Fahrzeugrads, ermittelt wird.

Vorzugsweise wird/werden in dem Messbetrieb die Masse der Partikel, insbesondere Feinstaub der Kategorisierung PM1, PM2,5, PM10, und/oder die Anzahl der Partikel, vorzugsweise mit einer Größe von 7 nm bis 2 µm sowie einer Größe von 300 nm bis 10 µm insbesondere simultan bestimmt. Optional kann, insbesondere zusätzlich, die Partikelgrößenverteilung und - konzentration mittels eines ELPI(Electrical Low Pressure Impactor)-Systems ermittelt werden. Die Partikelmassen der Kategorien PM1, PM2,5, PM10 werden vorzugsweise jeweils mittels einer separaten Probenentnahmesonde erfasst, die Anzahl der Partikel mit einer Größe von 7 nm bis 2 µm sowie einer Größe von 300 nm bis 10 µm mit einer gemeinsamen Probenentnahmesonde, stromab derer ein Strömungsteiler zur Aufteilung der entnommenen Probe (d. h. Teilvolumenstrom des Gasstromes) auf zwei Analyseeinheiten angeordnet sein kann. Zur Messung mit dem ELPI-System kann eine weitere Probenentnahmesonde vorhanden sein. Somit ist in Summe eine Anzahl von vier oder fünf Probenentnahmesonden vorteilhaft. Die Messung der Partikelmasse (PM) erlaubt die Bestimmung eines Emissionsfaktors (aus Partikelmasse pro gefahrenen Kilometern und ggf. pro Fahrzeuggewicht) als (z. B. normierte) Kenngröße, mittels welcher die Emissionen unterschiedlicher Reifen und/oder Fahrzeugen verglichen und Messergebnisse validiert werden können. Die Bestimmung der Partikelanzahl kann vorteilhaft zur Plausibilisierung und/oder Qualitätssicherung der Partikelmassenmessung herangezogen werden.

Vorzugsweise ist vorgesehen, dass nach dem Messbetrieb eine Offline-Charakterisierung von Partikelproben durchgeführt wird. Quelle der Partikel kann dabei beispielsweise das Reservoir und/oder die Analyseanordnung (etwa darin abgeschiedene Partikel) bilden. Die Offline-Charakterisierung umfasst beispielsweise Rasterelektronenmikroskopie, Gas-Chromatographie und/oder andere Techniken, um z. B. die Morphologie und/oder organische sowie anorganische chemische Zusammensetzung der gesammelten Partikel zu analysieren. Zudem kann bei der Offline-Charakterisierung ein Partikelgrößen-Tool (Feature Tool) verwendet werden, mittels dem eine statistische Partikelanalyse unter Bestimmung von Partikelgröße, Morphologie sowie chemischer Zusammensetzung durchgeführt wird.

Vorzugsweise wird vor und/oder nach dem Messbetrieb die Oberfläche des Fahrzeugrads kontrolliert, wobei ein Profil, insbesondere mittels eines Profilometers, ermittelt wird und/oder eine mikroskopische und/oder eine makroskopische Oberfläche z. B. mittels eines Lasers hinsichtlich der Stabilität überprüft wird. Beispielsweise wird dabei eine Oberflächenrauheit (z. B. über Ermittlung von Rz-Werten) quantifiziert und mit Werten repräsentativ für eine stabile Radoberfläche abgeglichen. Alternativ oder zusätzlich wird das Gewicht des Fahrzeugrads, vorzugsweise mehrere Male, z. B. mindestens sieben Mal, ermittelt, wobei insbesondere vor der Gewichtsermittlung nach dem Messbetrieb das Fahrzeugrad definiert gereinigt wird (z. B. mittels eines Pinsels ohne Krafteinwirkung) und bei der Reinigung sich lösende Partikel als Partikelemissionen berücksichtigt werden, beispielsweise einer Offline-Charakterisierung zugeführt werden.

In einer bevorzugten Ausführungsvariante des Verfahrens ist vorgesehen, dass das Messsystem nach dem Messbetrieb definiert gereinigt wird, wobei die Strömungswege (des Gasstromes; d. h. innerhalb der (gegebenenfalls vorhandenen) Einhausung, Kollektorvorrichtung, Sammelleitung und/oder Probenentnahmeleitung) zumindest abschnittsweise für eine vorbestimmte Zeitspanne, z. B. zwischen 5 und 15 Minuten, mittels eines definierten Luftvolumenstroms an (HEPA-)gefilterter Luft, vorzugsweise in Gegenstromrichtung zu der Strömung im Messbetrieb (mit umgekehrter Laufrichtung der Gasfördereinrichtung), durchströmt werden. (Einzelne dieser) Komponenten mit den Strömungswegen können auch periodisch (regelmäßig) getauscht werden.

Nachfolgend wird die Erfindung anhand von Ausführungsbeispielen unter Bezugnahme auf die Zeichnungen näher erläutert. Es zeigen:
- Fig. 1: eine schematische Darstellung eines Fahrzeugrads mit einem erfindungsgemäßen Messsystem umfassend eine Sammelleitung, eine Kollektorvorrichtung, eine Probenentnahmevorrichtung und eine Einhausung, in schematischer Darstellung in einer Draufsicht,
- Fig. 2: eine schematische Darstellung eines Fahrzeugrads mit einer weiteren Ausbildungsvariante des Messsystems, ohne die Einhausung, in einer Draufsicht,
- Fig. 3: eine schematische Darstellung der Sammelleitung im Querschnitt im Bereich einer Gruppe von Probenentnahmesonden der Probenentnahmevorrichtung,
- Fig. 4: die Sammelleitung und die Probenentnahmevorrichtung im Längsschnitt,
- Fig. 5: eine Ausbildungsvariante der Einhausung in Draufsicht auf eine außenseitige Deckwandung,
- Fig. 6 A,: B eine Ausbildungsvariante der Kollektorvorrichtung in Ansicht von vorne auf eine Eintrittsöffnung (Fig. 6 A) und von hinten auf ein anschlussseitiges Ende (Fig. 6 B) und
- Fig. 7 A, B: die Kollektorvorrichtung gemäß Fig. 6A, B in perspektivischer Ansicht von vorne (Fig. 7 A) und von hinten (Fig. 7 B).

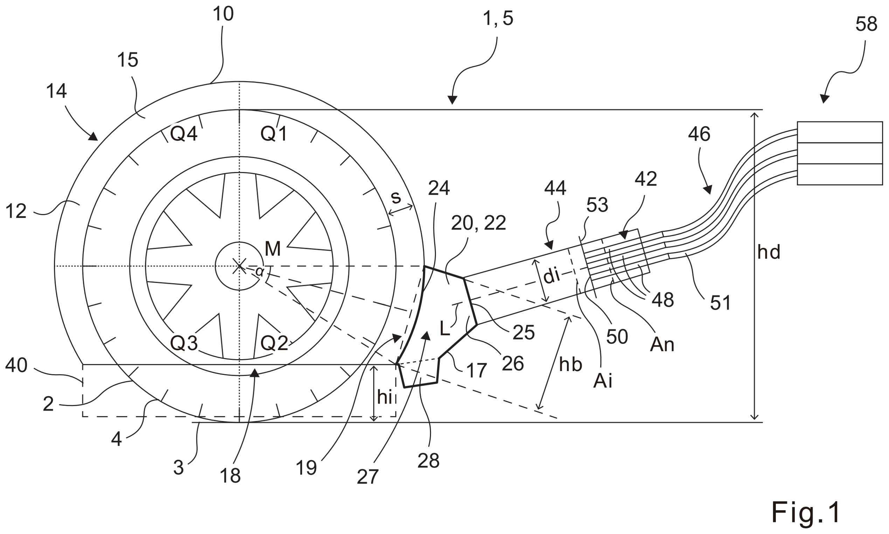

Fig. 1 zeigt ein mittels einer Lauffläche 4 mit einem Untergrund 3 in Kontakt stehendes Fahrzeugrad 2 eines (hier nicht dargestellten) Fahrzeuges, an dem ein Messsystem 1 angeordnet ist. Das Messsystem 1 weist eine Messanordnung 5 zur Bestimmung von Partikelemissionen, insbesondere Reifenabrieb, auf einem Rollenprüfstand und/oder in realer Umgebung (z. B. auf einer Fahrbahn oder einer Schiene) auf. Das Fahrzeugrad 2 ist rotationssymmetrisch um eine Radmittelachse M ausgerichtet.

Die Messanordnung 5 weist z. B. eine Einhausung 10 auf, innerhalb welcher das Fahrzugrad 2 angeordnet ist, und insbesondere nicht eine Fahrzeugbremse des Fahrzeugs, welche separat eingehaust sein kann. Somit werden mittels des Messsystems 1 umfassend die Einhausung 10 ausschließlich die Rad- bzw. Reifenpartikelemissionen, nicht die Bremspartikelemissionen gesammelt.

Die Einhausung 10 umfasst eine teilkreisförmig ausgebildete, außenseitige Deckwandung 12, die in Fig. 1 transparent dargestellt ist, sodass das Fahrzeugrad 2 innerhalb der Einhausung 10 sichtbar ist. Insbesondere parallel zu der außenseitigen Deckwandung 12 umfasst die Einhausung 10 eine z. B. ebenfalls teilkreisförmige, innenseitige (auf der in montiertem Zustand axial dem Fahrzeug zugewandten Seite der Einhausung 10 angeordnete) Deckwandung (in Fig. 1 nicht dargestellt). Die außenseitige Deckwandung 12 und/oder die innenseitige Deckwandung sind insbesondere orthogonal zu der Radmittelachse M ausgerichtet.

Zwischen der außenseitigen Deckwandung 12 und der innenseitigen Deckwandung ist an deren radialen Außenseiten eine insbesondere parallel zu der Radmittelachse M ausgerichtete Umfangswandung 14 befestigt. In montiertem Zustand ist von der außenseitigen Deckwandung 12, der Umfangswandung 14 und der innenseitigen Deckwandung ein Volumen von der Einhausung 10 umschlossen, innerhalb dessen sich das Fahrzeugrad 2 und ein zwischen dem Fahrzeugrad 2 den Wandungen (Deckwandungen, Umfangswandung 14) gebildeter Sammelraum 15 befindet. Die Deckwandungen sind ohne Kontakt zu dem Fahrzeugrad 2 möglichst nahe an diesem angeordnet.

Durch eine untergrundseitige Öffnung 18 innerhalb der Einhausung 10 bzw. dem Sammelraum 15 steht das Fahrzeugrad 2 mit dem Untergrund 3 in Kontakt.

Die Umfangswandung 14 weist einen vorzugsweise konstanten radialen Abstand s von dem Fahrzeugrad 2 auf, wobei der Abstand s z. B. 65 mm beträgt. Die Umfangswandung 14 umschließt das Fahrzeugrad 2 vorzugsweise kreisförmig umlaufend über einen Winkelbereich bezüglich der Umlaufrichtung um die Radmittelachse M zwischen z. B. 220° und 300°, unterbrochen von zumindest der untergrundseitigen Öffnung 18. Die untergrundseitige Öffnung 18 ist jeweils von einem vorzugsweise geraden, z. B. parallel zu dem (ebenen) Untergrund 3 ausgerichteten untergrundseitigen Ende der Deckwandungen und der Umfangswandung 14 umgrenzt. Die untergrundseitigen Enden weisen insbesondere einen Abstand hi (gemessen in Normalenrichtung zu den geraden Enden) zu dem Untergrund 3 bzw. der Stelle auf, an welcher das Fahrzeugrad 2 mit dem Untergrund 3 in Kontakt steht.

Der Abstand der Einhausung 10 zu dem Untergrund 3 lässt sich optional mittels an den untergrundseitigen Enden lösbar befestigten Endelementen 40 verringern. Die Endelemente 40 sind vorzugsweise an den Längsseiten und den Querseiten der untergrundseitigen Öffnung 18 angeordnet, wobei Fig. 1 beispielhaft (mit gestrichelten Linien dargestellt) eines der Endelemente 40 an der Längsseite zeigt. Die Endelemente 40 sind vorzugsweise aus einem anderen Material als die Deckwandungen und/oder die Umfangswandung 14, insbesondere elastisch verformbar ausgebildet. Mittels der Endelemente 40 ist der Sammelraum 15 weitgehend von der Umgebung getrennt.

An einer untergrundseitigen Unterseite 17 eines Strömungskanals 27 der Kollektorvorrichtung 20 kann ein Reservoir 28 zur Sammlung größerer Partikel angeordnet sein, welche nicht mit der Strömung an die Sammelleitung 44 transportiert werden. Das Reservoir 28 weist an seiner untergrundseitigen Unterseite vorzugsweise einen lösbaren, z. B. magnetisch befestigten Deckel 29 auf, aus dem in dem Reservoir 28 gesammelte Partikel einfach entnommen werden können. Das Reservoir 28 kann gegenüber dem Strömungskanal 27 vorzugsweise derart verschlossen werden, dass an der Unterseite 17 zumindest im Wesentlichen keine Kavität gebildet und/oder der Wandungsverlauf der Unterseite 17 zumindest im Wesentlichen stetig ist, beispielsweise mittels eines von unten eingeschoben Einsatzes (in Fig. 1 nicht gezeigt).

Das Messsystem 1 bzw. die Messanordnung 5 umfasst weiterhin eine entlang einer Längsachse L verlaufende Sammelleitung 44 zur Leitung einer gesammelten Gasströmung, insbesondere einer partikelbeladenen Luftströmung, an eine Probenentnahmevorrichtung 46. Die Sammelleitung 44 ist insbesondere als zylindrisches Rohr ausgebildet, wobei die Längsachse L die Mittellängsachse bzw. Symmetrieachse bildet.

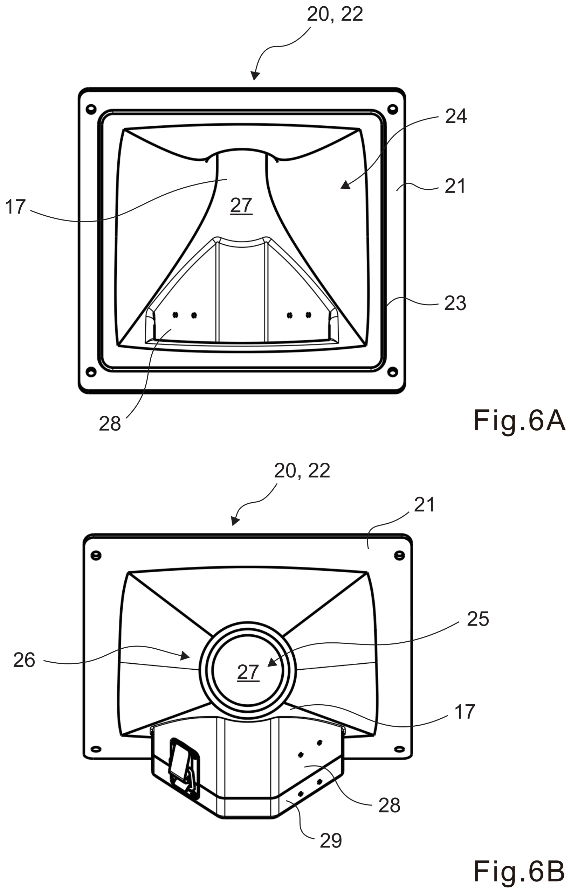

Weiterhin umfasst das Messsystem 1 bzw. die Messanordnung 5 eine Kollektorvorrichtung 20 mit einem Strömungskanal 27 (vgl. Fig. 6A) zur Sammlung der Gasströmung aus einem Bereich an dem Fahrzeugrad 2 und Überführung an die Sammelleitung. Der Bereich ist derjenige, welcher für die Emissionsmessungen relevant ist, möglichst nahe an dem Fahrzeugrad 2. Die Kollektorvorrichtung 20 ist mit einer Eintrittsöffnung 24 in Richtung des Fahrzeugrades 2 ausgerichtet und an einem anschlussseitigen Ende 26 mit einer sammelleitungsseitigen Austrittsöffnung 25, die insbesondere zumindest im Wesentlichen deckungsgleich mit einem Strömungsquerschnitt der Sammelleitung 44 ausgebildet ist, an der Sammelleitung 44 vorzugsweise lösbar befestigt. Seitens der Eintrittsöffnung 24 ist die Kollektorvorrichtung 20 vorliegend beispielhaft an der Einhausung 10 vorzugsweise lösbar befestigt.

Weiterhin umfasst das Messsystem 1 bzw. die Messanordnung 5 eine Probenentnahmevorrichtung 46 mit vorliegend beispielhaft drei Probenentnahmeleitungen 51. Die Probenentnahmeleitungen 51 weisen jeweils eine vorzugsweise starr ausgebildete Probenentnahmesonde 48 auf, welche insbesondere parallel zu der Längsachse L ausgerichtet in die Sammelleitung 44 hineinragt. Eintrittsseitig ist an der Probenentnahmesonde 48 jeweils eine Entnahmeöffnung 50 zur Probenentnahme aus der Gasströmung innerhalb der Sammelleitung 44 angeordnet. Stromab der Probenentnahmesonde 48, außerhalb der Sammelleitung 44, kann die Probenentnahmeleitung 51 flexibel ausgebildet sein. Die Probenentnahmeleitung 51 führt die aus dem Gasstrom entnommene, partikelbeladene Gasprobe an eine Analyseanordnung 58, wobei die Gasprobe insbesondere online, während eines Messbetriebs, analysiert wird. Vorzugsweise weist die Analyseanordnung 58 mehrere, z. B. vier oder fünf, Analyseeinheiten auf, wobei insbesondere jeder Analyseanordnung eine einzelne Probenentnahmeleitung 51 zugeordnet ist.

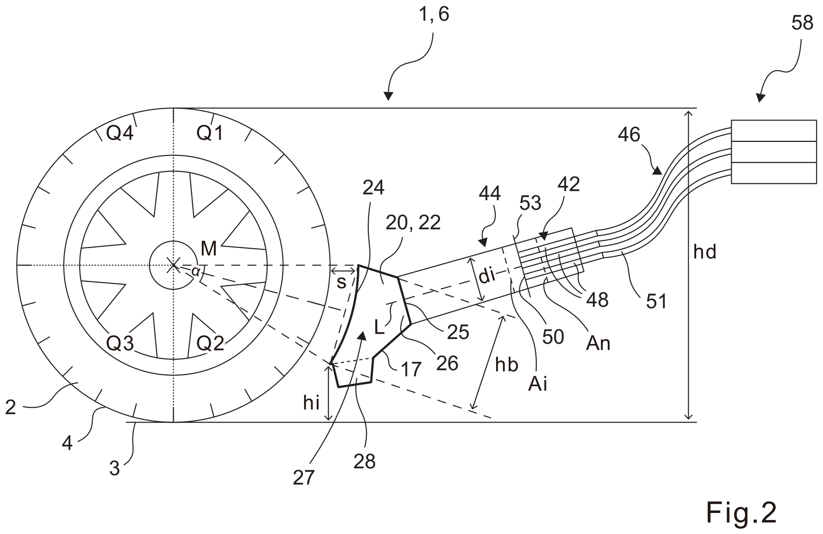

Fig. 2 zeigt eine weitere Ausbildungsvariante des Messsystems 1, mit einer Messanordnung 6, wobei im Unterschied zur Ausführung nach Fig. 1 die Einhausung 10 nicht vorhanden ist. Abgesehen davon ist die Messanordnung 6 insbesondere hinsichtlich der Ausbildung der Hauptkomponenten (umfassend zumindest die Sammelleitung 44, Kollektorvorrichtung 20 und Probenentnahmevorrichtung 46) und deren Anordnung zueinander und zu dem Fahrzeugrad 2 z. B. identisch zu der in Fig. 1 gezeigten Messanordnung 5 aufgebaut.

Das Messsystem 1 ist darauf ausgelegt, die Partikelemissionen des Fahrzeugrads 2 mit hoher Effizienz und/oder hoher Reproduzierbarkeit zu messen. Zu diesem Zweck ist das Messsystem 1 sowohl in Fig. 1 als auch in Fig. 2 gemäß nachstehender Dimensionierungsregeln angeordnet und/oder ausgebildet.

Dabei ist die Kollektorvorrichtung 20 auf das Fahrzeugrad 2 derart abgestimmt, dass die Eintrittsöffnung 24 eine Höhe hb aufweist, die mindestens 20 %, vorzugsweise mindestens 25 % einer Höhe hd (entsprechend dem Durchmesser) des Fahrzeugrads 2 entspricht. Insbesondere ist die Höhe hb größer als eine Breite der Eintrittsöffnung 24 in axialer Richtung (bezüglich der Radmittelachse M).

Vorliegend ist die Umrandung der Eintrittsöffnung 24 der Kollektorvorrichtung 20 sowohl in Fig. 1 als auch in Fig. 2 mit dem radialen Abstand s von der Lauffläche 4 des Fahrzeugrads 2 beabstandet angeordnet, wobei der Abstand s vorzugsweise im Wesentlichen (z. B. mit einer Abweichung von +/- 5mm) konstant ist. Dabei ist die Umrandung entsprechend der Krümmung der Umfangswandung 14 (Fig. 1) bzw. einer entsprechenden Kontur eines Kreisbogens um die Radmittelachse M (im radialen Abstand s von dem Fahrzeugrad 2; Fig. 2) ausgebildet. Die Höhe hb entspricht dem Maß der Sehne des Kreissegments mit einem Öffnungswinkel α, über welchen sich die Eintrittsöffnung 24 erstreckt, d. h. hb = sin(0,5* α)*(hd+2s). Der Öffnungswinkel α beträgt dabei insbesondere zumindest 30° oder 35°, und z. B. maximal 45°.

Zudem ist die Eintrittsöffnung 24 zumindest großteils, vorzugsweise vollständig innerhalb eines radrückseitigen, untergrundseitigen Quadranten Q2 des Fahrzeugrades angeordnet. Dabei weist die Kollektoröffnung 20 an dem untergrundseitigen Ende der Umrandung der Eintrittsöffnung 24 insbesondere den Abstand hi zu dem Untergrund 3 bzw. der Kontaktstelle zwischen Fahrzeugrad 2 und Untergrund 3 auf.

Ein Durchmesser di der Sammelleitung 44 beträgt insbesondere zumindest 30 %, vorzugsweise zumindest 50 % der Höhe hb der Eintrittsöffnung 24, d. h. di ≥ 0,5 hb.

Innerhalb der Sammelleitung 44 beträgt insbesondere ein freier Strömungsquerschnitt An im Bereich der zumindest einen Probenentnahmesonde 48 (stromab einer Messebene 53) zumindest 50 % eines freien Strömungsquerschnittes Ai, mit Ai = π (di/2)², im Bereich stromauf der Probenentnahmesonde 48 (stromauf einer Messebene 53), d. h. An ≥ Ai*0,5.

Zusammengefasst ist somit das Messsystem 1 vorteilhaft zumindest gemäß folgender Dimensionierungsregeln aufgebaut:

| | | | | |
|---|---|---|---|---|
| hd | hb ≥ 0,25 hd, mit z. B. | di ≥ 0,5 hb | Ai = π (di/2)² | An ≥ Ai*0,5 |
| | hb = sin(0,5* α)*(hd+2s) | | | |

Insbesondere die Kombination dieser Merkmale steigert die Qualität und/oder Reproduzierbarkeit der Messungen, wobei auch einzelne Merkmale oder Unterkombinationen dieser Merkmale bereits einen Qualitätssteigerungseffekt ergeben können.

Bei Vorhandensein mehrerer Probenentnahmesonden 48 sind die Entnahmeöffnungen 50 dabei in gleichen axialen Abständen von der Kollektorvorrichtung 20 bzw. gleichen axialen Positionen, in der Messebene 53, angeordnet.

Die einzelnen Probenentnahmeleitungen 51 mit den Probenentnahmesonden 48 weisen insbesondere einen Strömungsdurchmesser von mindestens 10 mm und vorzugsweise maximal 18 mm auf. Die Leitungslänge zwischen den Entnahmeöffnungen 50 und der Analyseanordnung 58 beträgt insbesondere maximal 1 m und/oder weist keine scharfen Kurven auf.

Um eine elektrostatische Aufladung der strömungsführenden Komponenten zu vermeiden, sind zumindest die während des Betriebs von der Gasströmung überströmten Bereiche bzw. Wandflächen der Hauptkomponenten, d. h. der Kollektorvorrichtung 20, der Sammelleitung 44, der Probenentnahmevorrichtung 46 und gegebenenfalls der Einhausung 10, vorzugsweise aus elektrisch leitfähigem Material, insbesondere aus Metall und/oder aus elektrisch leitfähigem Kunststoff ausgebildet.

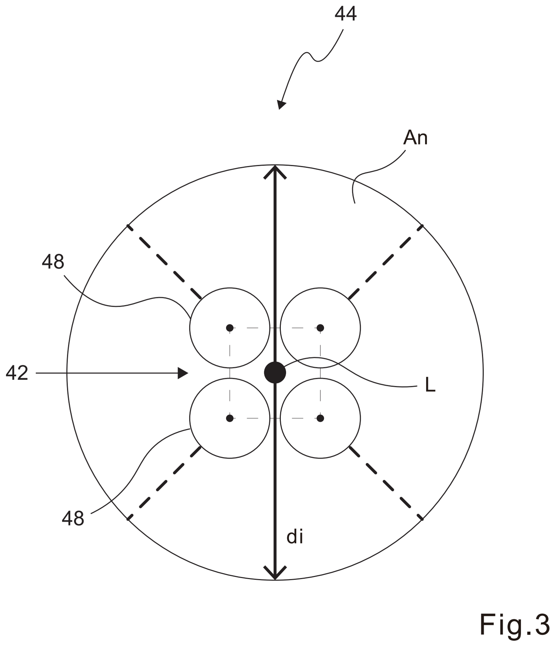

Fig. 3 zeigt einen Querschnitt durch die Sammelleitung 44 orthogonal zu der Längsachse L stromauf der Messebene 53, wobei eine Gruppe 42 von beispielhaft vier Probenentnahmesonden 48 vorhanden ist. Die Probenentnahmesonden 48 sind insbesondere möglichst dünnwandig, beispielsweise mit einer Wandstärke von 1 mm, ausgebildet, derart, dass eine ausreichende Stabilität gewahrt ist, jedoch die Strömung möglichst wenig beeinflusst wird. Die Probenentnahmesonden 48 sind parallel zu der Längsachse L ausgerichtet (vgl. auch Fig. 1 und Fig. 2). Wie Fig. 3 zeigt, sind die Probenentnahmesonden 48 im Querschnitt (mit ihren Mittelpunkten) symmetrisch und/oder benachbarte Probenentnahmesonden 48 sind äquidistant zueinander und bezüglich der Längsachse L angeordnet, wobei der Mittelpunkt des vorliegenden Düsenmusters, hier beispielhaft quadratisch, dem Mittelpunkt der Sammelleitung 44 entspricht. Zudem sind die Probenentnahmesonden 48 mit einem Mindestabstand von der inneren Wandung der Sammelleitung 44 derart angeordnet, dass sie sich vorzugsweise außerhalb der Grenzschicht der Rohrströmung befinden. Mittels dieser Maßnahmen kann der Partikelverlust bei der Probenentnahme und/oder innerhalb der Probeentnahmeleitungen 51 minimiert werden.

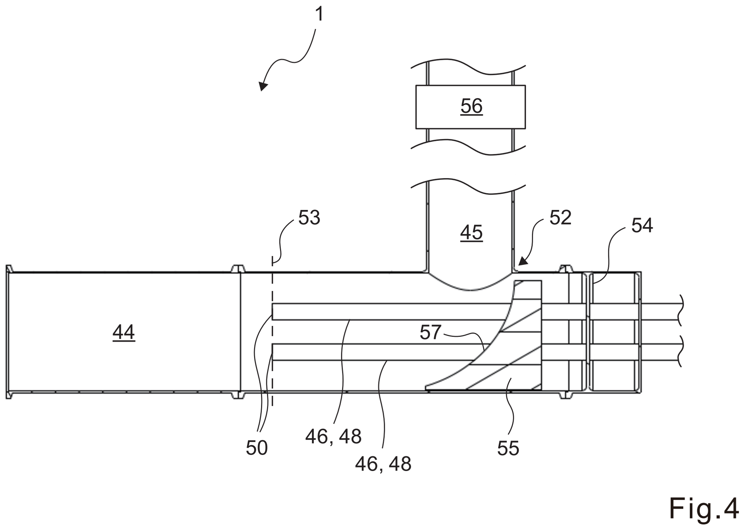

Fig. 4 zeigt einen Teil des Messsystems 1 mit der Sammelleitung 44 und andeutungsweise den Probenentnahmesonden 48 in einem Längsschnitt. Die Sammelleitung 44 kann modular aufgebaut sein. Die Probeentnahmesonden 48 ragen parallel zu der Längsachse L in die Sammelleitung 44 hinein, wobei jeweilige Entnahmeöffnungen 50 vorzugsweise orthogonal zur Hauptströmungsrichtung ausgerichtet sind, um eine Strömungsumlenkung bei der Probeentnahme zu vermeiden. Die Messebene 53 bzw. Entnahmeöffnungen 50 ist/sind insbesondere in einem Abstand von zumindest 1 x di, vorzugsweise zumindest 1,5 x di oder 2 x di (vgl. Fig. 3), beabstandet von der Austrittsöffnung 25 angeordnet, sodass die Probenentnahme innerhalb einer ausgebildeten Rohrströmung erfolgt. Der Gas(volumen)strom und der Strömungsdurchmesser der Sammelleitung 44 sind derart auf die Probeentnahmesonden 48 abgestimmt, dass eine isokinetische Probenentnahme erfolgt, wobei eine Veränderung der Strömungsgeschwindigkeit der partikelbeladenen Gasströmung bei Entnahme der Probe aus der Sammelleitung 44 in die Probenentnahmesonde 48 kleiner 20 % beträgt.

Um eine zumindest weitgehend ausgebildete Rohrströmung bei unterschiedlichen Messaufgaben und/oder Messeinheiten gewährleisten zu können, ist die Probeentnahmevorrichtung 46 axial (entlang der Strömungsrichtung) verschiebbar und/oder lösbar an der Sammelleitung 44 positioniert. Auf diese Weise kann bei veränderten Messbedingungen die Messebene 53 bzw. die axiale Position (in Strömungsrichtung) der Probenentnahmesonde/n 48 innerhalb der Sammelleitung 44 verändert und/oder die Kollektorvorrichtung 20 getauscht werden und somit können diese Komponenten jeweils für eine bestimmte Messaufgabe optimiert aufeinander abgestimmt innerhalb des Messsystems 1 verwendet werden.

Stromab der Position der Entnahmeöffnungen 50 bzw. der Messebene 53 ist eine Strömungsumlenkung 52 um z. B. 90° von der Sammelleitung 44 in eine beispielsweise abschnittsweise zylindrische Ableitung 45 vorgesehen, durch welche die restliche Gasströmung nach Probenentnahme stromab der Entnahmeöffnungen 50 abgeführt werden kann. Der Abstand der Entnahmeöffnungen 50 zu der Strömungsumlenkung 52 (bzgl. einer stromaufseitigen Kante) beträgt beispielsweise zwischen 0,5-mal und 3-mal dem Strömungsdurchmesser di der Sammelleitung 44, um einen Einfluss von Einlaufeffekten an der Strömungsumlenkung 52 auf die Probeentnahme zu vermeiden.

Stromab der Strömungsumlenkung 52 ist vorzugsweise eine Platte 54 zum fluiddichten Verschluss der Sammelleitung 44 in Richtung der Analyseanordnung 58 positioniert. Vorzugsweise ist z. B. zusätzlich im axialen Bereich der Strömungsumlenkung 52 insbesondere über zumindest Großteil des Strömungsquerschnitts der Sammelleitung 44 ein Umlenkelement 55 positioniert, umfassend Durchführungen für die Probenentnahmesonden. Das Umlenkelement 55 weist auf der im Betrieb überströmten Seite eine gekrümmte Strömungsleitfläche 57 auf. Dadurch wird eine verwirbelungsarme bzw. -freie Strömungsumlenkung unterstützt, wodurch die isokinetischen Bedingungen bei der Probenentnahme zumindest im Wesentlichen aufrechterhalten werden. Das Umlenkelement 55 ist insbesondere additiv gefertigt.

In der Ableitung 45 ist eine Gasfördereinrichtung 56, insbesondere ein Lüfter, zur Förderung der Gasströmung aus der Kollektorvorrichtung 20 und stromab derselben vorhanden (in Fig. 4 andeutungsweise dargestellt). Stromab der Gasfördereinrichtung 56 ist vorzugsweise ein Auslass zur Abgabe der restlichen Gasströmung an die Umgebung vorhanden (hier nicht gezeigt).

Insbesondere ist die Gasfördereinrichtung 56 zur Einstellung des Gas-(Volumen-) Stroms mittels Regelung ausgebildet. Die Regelung erfolgt insbesondere auf eine bestimmte Geschwindigkeit des Gasstromes (oder damit in Zusammenhang stehender Größen), vorzugsweise innerhalb der Sammelleitung 44. Die Geschwindigkeit hängt von äußeren Bedingungen ab, beispielsweise der Größe des Fahrzeugrads 2, an welcher die weitere Dimensionierung des Messsystems 1 ausgerichtet ist. Die Geschwindigkeit kann beispielsweise zwischen 5 m/s und 15 m/s betragen. Dabei wird die Geschwindigkeit gemessen, z. B. mittels eines in der Sammelleitung 44 angeordneten Anemometers, und Abweichungen von einer Soll-Geschwindigkeit innerhalb des Gasstromes, z. B. aufgrund von Änderung der Reifenrotation im Fahrbetrieb, werden mittels der Regelung ausgeglichen. Auf diese Weise werden vorteilhaft über den Messbetrieb insbesondere dauerhaft isokinetische Messbedingungen sichergestellt.

Zur (weiteren) Minimierung von Messfehlern insbesondere bei der Massenmessung (PM) von Partikeln sind vorzugsweise Vorrichtungen zur Messung des Massenflusses, insbesondere Massenfluss-Controller, innerhalb der Probenentnahmeleitung/en 51 oder innerhalb der Analyseanordnung 58 angeordnet, insbesondere stromauf innerhalb der Analyseanordnung 58 vorhandener Vakuumpumpen. Diese Messwerte werden vorteilhaft zur zusätzlichen Regelung und/oder Nachregelung zum Erhalt eines konstanten Massenstroms innerhalb der Probenentnahmeleitung/en 51 mittels zumindest einer der Vakuumpumpen herangezogen.

Zur Regelung des Gas-(Volumen-)Stroms mittels der Gasfördereinrichtung 56 und/oder mittels der Vakuumpumpe umfasst das Messsystem 1 insbesondere zumindest eine (hier nicht gezeigte) Steuereinrichtung, die auch einer übergeordneten Anlagensteuerung, z. B. eines Rollenprüfstandes, zugeordnet sein kann.

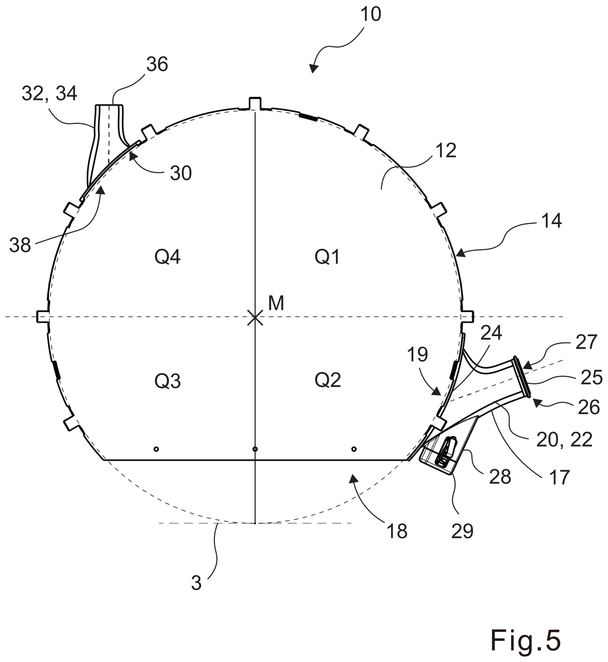

Fig. 5 zeigt eine beispielhafte Ausbildungsvariante der Einhausung 10 in detaillierterer Darstellung ohne Fahrzeugrad 2 in einer Draufsicht auf die außenseitige Deckwandung 12. Dabei ist an der Umfangswandung 14 beispielhaft eine Adapteröffnung 30 angeordnet, welche z. B. in einem oberen, (bezüglich einer nicht gezeigten Fahrzeugvorderseite) radvorderseitigen Quadranten Q4 bezüglich der Radmittelachse M (vgl. Fig. 2) angeordnet ist, z. B. in dessen mittlerem Drittel bzgl. der Umlaufrichtung.

Die Adapteröffnung 30, die Eintrittsöffnung 24 und/oder die Kollektoröffnung 19 erstrecken sich axial vorzugsweise über mehr als 70 %, beispielsweise zwischen 80 % und 95 % der axialen Breite der Umfangswandung 14, und weist/weisen beispielsweise eine geringere Erstreckung in Umlaufrichtung auf als in die Breite.

An der Adapteröffnung 30 ist eine Funktionseinheit 32 lösbar befestigt oder befestigbar. In Fig. 5 ist die Funktionseinheit 32 durch eine Gas-Zufuhrdüse 34 gebildet, die seitens der Umfangswandung 14 eine z. B. im Wesentlichen viereckige Zufuhröffnung 38 und an der gegenüberliegenden Seite ein insbesondere kreisförmiges, anschlussseitiges Ende 36 aufweist. Die Gas-Zufuhrdüse 34 ist z. B. großteils mit tangentialer Richtungskomponente bezüglich des Fahrzeugrads 2 ausgerichtet, beispielsweise orthogonal zu dem Untergrund 3 (in montiertem Zustand, vgl. Fig. 1). Die Funktionseinheit 32 kann alternativ oder zusätzlich eine Kamera oder eine Aufnahmevorrichtung für eine Kamera zu optischen Messzwecken, eine Partikel-Zugabevorrichtung und/oder eine Messeinrichtung und/oder eine Wärmeerfassungseinrichtung, insbesondere eine Wärmebildkamera, zur Überwachung der Temperatur des Fahrzeugrades 2 aufweisen oder daraus gebildet sein.

Fig. 5 zeigt zudem eine bevorzugte Ausbildungsvariante der Kollektorvorrichtung 20, die der möglichst strömungsgünstigen Überführung des für die Partikelsammlung optimierten Strömungsquerschnitts an der Eintrittsöffnung 24 auf den für die Probenentnahme optimierten Strömungsquerschnitt an der Austrittsöffnung 25 dient. Die Form der Kollektorvorrichtung 20 weist entsprechend insbesondere stetige, abgerundete Flächenverläufe auf, mit möglichst wenigen bzw. ohne Strömungsablösungen induzierenden Vorsprüngen.

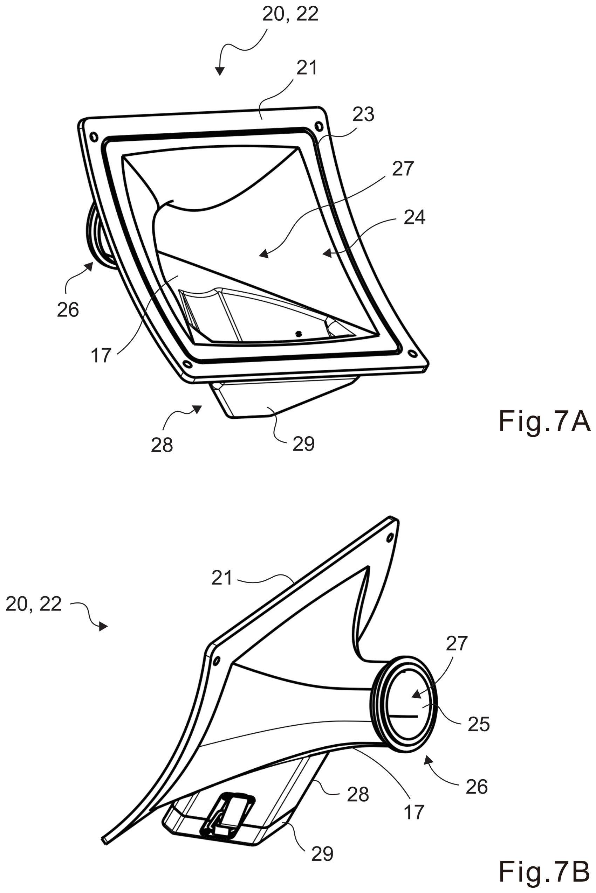

Fig. 6A und Fig. 6B zeigen die Ausbildungsvariante der Kollektorvorrichtung 20 gemäß Fig. 5 in Ansicht von vorne auf die Eintrittsöffnung 24 bzw. von hinten auf die Austrittsöffnung 25, Fig. 7A und Fig. 7B in perspektivischer Ansicht von vorne bzw. von hinten.

Für eine möglichst fluiddichte Befestigung der Kollektorvorrichtung 20 an der Umfangswandung 14 weist die Kollektorvorrichtung 20 umlaufend um die Eintrittsöffnung 24 eine komplementär zu der Umfangswandung 14 in dem entsprechenden Bereich geformte Anlagefläche 21 auf. Die Anlagefläche 21 liegt vorzugsweise möglichst flächig an der Umfangswandung 14 um die Kollektoröffnung 19 an, beispielsweise unter Zwischenordnung eines umlaufend um die Kollektoröffnung 19 bzw. die Eintrittsöffnung 24 angeordneten Dichtmittels 23.

Die Optimierung hinsichtlich eines günstigen Strömungsverlaufs erfolgt insbesondere mittels computergestützter Strömungssimulation. Auf diese Weise wird bei gleichzeitig kompakter Ausbildung der Kollektorvorrichtung die Entstehung einer voll, oder zumindest weitgehend, ausgebildeten Rohrströmung innerhalb der Sammelleitung 44 über eine möglichst kurze Strecke vorteilhaft unterstützt.

Die Kollektorvorrichtung 20 ist z. B. als Sammeldüse 22, mit einer Querschnittsverengung zwischen der Eintrittsöffnung 24 und der Austrittsöffnung 25 ausgebildet. Die Querschnittsverengung ist insbesondere unter Berücksichtigung der Messbedingungen zum Erhalt einer isokinetischen Strömungsgeschwindigkeit zwischen der Sammelleitung 44 und einer Probenentnahmevorrichtung 46 (vgl. Fig. 1) angepasst, wobei bei gegebenen Betriebsbedingungen eine möglichst gleichbleibende Strömungsgeschwindigkeit der Gasströmung (beispielsweise mit einer Abweichung von maximal 20 %) innerhalb der Sammelleitung 44 und/oder der Probenentnahmevorrichtung 46 erreicht oder zumindest angestrebt wird.

Dabei verläuft der Strömungskanal 27 (bezüglich seiner Mittelachse) ausgehend von der Eintrittsöffnung 24 z. B. mit tangentialer Richtungskomponente weg von der Umfangswandung 14, wobei zumindest die Unterseite 17 und vorzugsweise die Mittelachse des Strömungskanals 27 in Strömungsrichtung nach radial außen und nach oben, von dem Untergrund 3 wegführend, ausgerichtet sind. So wird eine abrupte Strömungsumlenkung bei Abfuhr des Luftstromes aus dem Sammelraum 15 vermieden. Die Neigung einer Mittelachse des Strömungskanals 27 beträgt dabei (in montiertem Zustand) z. B. zwischen 15° und 25° zu dem (ebenen) Untergrund 3. Durch diese Ausbildungsmerkmale werden vorteilhaft über eine möglichst kurze Strecke Einlaufeffekte der Luftströmung bei deren Abfuhr abgebaut und eine im Wesentlichen ausgebildeten Rohrströmung innerhalb des zylindrischen anschlussseitigen Endes 26 und/oder der Sammelleitung 44 erreicht, wodurch eine genaue Partikelmessung ermöglicht wird. Innerhalb des Sammelraumes 15 erzeugte Turbulenz wird wesentlich reduziert. So kann die Kollektorvorrichtung 20 vorteilhaft vergleichsweise kurz ausgebildet sein, wobei der Strömungskanal 27 beispielsweise eine Länge (in Strömungsrichtung) zwischen 1,5-mal und 4-mal einem Durchmesser des Strömungsquerschnitts der Austrittsöffnung 25 in Umlaufrichtung aufweist.

Die in Fig. 5 und den Figuren 6 A, B und 7 A, B gezeigte Ausbildungsvariante der Kollektorvorrichtung 20 ist auch bei der in Fig. 2 gezeigten Messanordnung 6, ohne die Einhausung 10, vorteilhaft verwendbar. Dabei ist sie vorzugsweise bezüglich des Fahrzeugrads 2 an der gleichen Position angeordnet ist wie bei der Messanordnung 5 mit der Einhausung 10, wobei sie beispielsweise über die Sammelleitung 44 gehaltert ist. Die Sammelleitung 44 kann wiederum an dem Fahrzeug befestigt sein, beispielsweise über mehrere Befestigungspunkte wie einer Abschleppöse, einem Fahrzeugunterboden und/oder einem Längsträger im Fahrgestell (hier nicht gezeigt).

Mittels des Messsystems 1 lassen sich insbesondere mittels der Messanordnung 5 umfassend die Einhausung 10 äußerst präzise und mit höherer Reproduzierbarkeit die Partikelemissionen eines Fahrzeugrads 2 mit möglichst vollständiger Erfassung der Partikel, insbesondere eines (z. B. PKW- und/oder Lkw-) Reifens ermitteln. Die Messanordnung 6, ohne die Einhausung 10, auch als "Düsen-Messanordnung" bezeichnet, ermöglicht in Ergänzung dazu vorteilhaft eine Korrelierung und/oder Herstellung der Vergleichbarkeit mit bisher getätigten Partikel-Emissionsmessungen ohne Einhausung 10, beispielsweise abseits eines Prüfstandes, auf einer Straße. Zudem lassen sich mittels der einfacher zu implementierenden Messanordnung 6 kosteneffizienter flächendeckende Messungen durchführen, wie periodische, technische Überprüfungen im Rahmen einer Hauptuntersuchung und/oder Flottencharakterisierungen. Dabei ist die Messanordnung 6 auch bei denkbaren Achsen- und/oder Fahrmanöver-Betrachtungen geeignet.

Vorzugsweise wird in einer Art Kalibrierbetrieb der gleiche Messbetrieb mit der Messanordnung 5 und mit der Messanordnung 6 durchgeführt. Dabei erfolgt die Messung bevorzugt mit einem Messsystem 1 umfassend die beiden Messanordnungen 5 und 6 simultan, wobei insbesondere die Messanordnungen 5, 6 an demselben Fahrzeug, an unterschiedlichen Fahrzeugrädern 2, angeordnet sind. Insbesondere ist dabei auch jeweils die Analyseanordnung 58 und die Gasfördereinrichtung 56 bei beiden Messanordnungen 5, 6 separat vorhanden.

Dieses Vorgehen erlaubt anschließend eine Abschätzung der tatsächlichen Partikelemissionen mittels Messungen ausschließlich mit der Düsen-Messanordnung 6 z. B. innerhalb des vorstehend genannten, breiteren Einsatzgebiets.

Nachstehend wird ein vorteilhafter Messbetrieb inklusive Schritten zur Vorbereitung und Nachbereitung des Messbetriebs genauer erläutert.

Mit der Messanordnung 5 wird der Messbetrieb insbesondere bei einem Fahrzeug an ungelenkten Fahrzeugrädern, in der Regel den hinteren Fahrzeugrädern 2, durchgeführt.

Insbesondere wenn der Messbetrieb als Kalibrierbetrieb und/oder mit der Messanordnung 5 zur vollständigen Partikelerfassung durchgeführt wird, erfolgt der Messbetrieb vorzugsweise auf einem Rollenprüfstand und/oder in einer Klimakammer unter definierten, kontrollierten Umgebungsbedingungen. Dabei liegt eine definierte Temperatur vorzugsweise zwischen 22 °C und 24 °C, eine definierte Luftfeuchtigkeit vorzugsweise zwischen 48 % und 52 % und/oder ein definierter maximaler Partikelgehalt der Umgebungsluft innerhalb der Klimakammer bei 300 Partikel pro cm³. Die gewünschte Partikelkonzentration wird insbesondere mittels Luftreiniger hergestellt.

Eine Rolle des Rollenprüfstands als Untergrund 3 weist insbesondere eine definierte Oberfläche auf, die z. B. mit einer schleifpapierähnlichen Beschichtung, mit einer bestimmten Körnung, versehen werden kann, um eine definierte Reibpaarung einhergehend mit einer reproduzierbaren Abreibung zu erhalten.

In einem vorbereitenden Schritt wird vorzugsweise vor dem Messbetrieb die Oberfläche des zu vermessenden Fahrzeugrads 2 kontrolliert, wobei ein Profil z. B. mittels eines Profilometers ermittelt wird. Zusätzlich kann die mikroskopische und/oder makroskopische Oberfläche des Fahrzeugrads 2 z. B. mittels eines Lasers hinsichtlich ihrer Stabilität überprüft werden, wobei beispielsweise eine Oberflächenrauheit quantifiziert und mit Werten repräsentativ für eine stabile Radoberfläche abgeglichen wird.

Bei Durchführung des Messbetriebs auf einem Rollenprüfstand kann auch die mit dem Fahrzeugrad 2 als Untergrund in Kontakt stehende Rolle überprüft werden.

Weiterhin wird das Gewicht des Fahrzeugrads 2 mehrere Male, z. B. mindestens sieben Mal, ermittelt, bis eine vorgegebene Standardabweichung erfüllt wird. Bei Nichterfüllung werden drei weitere Messungen durchgeführt.

In einem z. B. separaten, insbesondere dem Messbetrieb vorgeschalteten Charakterisierungsbetrieb werden z. B. unter gleichen Messbedingungen (mit dem gleichen Messsystem und kontrollierten Umgebungsbedingungen) eine Hintergrundpartikelkonzentration, eine Partikelanzahl und/oder eine Partikelsammlungseffizienz und/oder Partikeltransporteffizienz und/oder eine Verdünnung innerhalb des Systems gemessen.

Der Charakterisierungsbetrieb nach Aufbau des Messsystems 1 kann auch z. B. einmalig für mehrere Messbetriebe durchgeführt werden.

Bei dem Messbetrieb rollt in zumindest einem definierten Fahrzyklus das Fahrzeugrad auf einem Untergrund ab, wobei aus einem Bereich an dem Fahrzeugrad 2 eine Gasströmung mittels der Kollektorvorrichtung 20 gesammelt wird. Die Gasströmung wird insbesondere mittels der Gasfördereinrichtung 56 angesaugt. Mittels der Kollektorvorrichtung 20 wird die Gasströmung in die Sammelleitung 44 überführt. Innerhalb der Sammelleitung 44 wird mittels zumindest der Probenentnahmesonde 48 eine Probe, d. h. ein partikelbeladener Teilvolumenstrom der Gasströmung, aus der Gasströmung entnommen und an eine Analyseanordnung 58 geleitet.

Mittels der Analyseanordnung 58 wird die Gasprobe bevorzugt online, d. h. simultan während des Messbetriebs, charakterisiert. Dabei wird vorzugsweise die Partikelmasse an Feinstaub der Kategorisierung PM1, PM2,5 und PM10 ermittelt. Zudem wird die Anzahl der Partikel mit einer Größe von 7 nm bis 2 µm (PN (7 nm bis 2 µm)) sowie die Anzahl der Partikel mit einer Größe von 300 nm bis 10 µm (PN (300 nm bis 10 µm)) bezogen auf ein bestimmtes Volumen ermittelt. Optional kann die Partikelgrößenverteilung und -konzentration mittels eines ELPI(Electrical Low Pressure Im-pactor)-Systems ermittelt werden.

Innerhalb eines Messbetriebs werden mehrere, vorzugsweise mindestens fünf, z. B. acht Fahrzyklen hintereinander durchgeführt. Als Startbedingung für einen einzelnen Fahrzyklus dient z. B. eine Temperatur des Fahrzeugrads 2, insbesondere eine Reifentemperatur, die vor dem Start auf eine definierte maximale Starttemperatur oder darunter abgesunken sein muss. Die definierte Starttemperatur wird zuvor z. B. in Abhängigkeit definierter Randbedingungen, beispielsweise des Reifentyps und/oder saisonaler Bedingungen, festgelegt.

Bei dem Fahrzyklus kann es sich beispielsweise um einen Standardzyklus aus der Fahrzeugzulassung, z. B. einen WLTC-Zyklus, handeln. Möglich ist auch die Definition eines speziellen Fahrzyklus, z. B. um das Abriebverhalten bei bestimmten Betriebsbedingungen (z. B. unter vermehrtem Einsatz von Bremsen und/oder bei Konstantfahrten) zu vergleichen. Durch eine systematische Auswertung verschiedener Messbetriebe, mit unterschiedlichen Fahrzyklen, kann so sukzessive eine umfangreiche Bibliothek von Reifenabrieb erstellt werden, welche in Zukunft eine Zuordnung mittels eines Machine Learning tools von unterschiedlichen Fahrszenarien und unterschiedlichen Ausgangsquellen (Reifen, Straße, andere Quellen) zulässt.

Nach dem Messbetrieb erfolgt wiederum die Kontrolle der Oberfläche des Fahrzeugrads 2 wie vor dem Messbetrieb angegeben sowie das Wiegen des vermessenen Fahrzeugrads 2. Vor der Gewichtsermittlung mittels Wiegen wird dabei das Fahrzeugrad 2 definiert gereinigt, beispielsweise mittels eines Pinsels ohne Krafteinwirkung, wobei bei der Reinigung sich lösende Partikel mit gewogen und als Partikelemissionen berücksichtigt werden. Diese Partikel können z. B. einer Offline-Charakterisierung zugeführt werden.

Nach dem Messbetrieb wird insbesondere das Messsystem bzw. die Messanordnung 5, 6 definiert gereinigt, wobei die Strömungswege zumindest abschnittsweise für eine vorbestimmte Zeitspanne mittels eines definierten Luftvolumenstroms gefilterter Luft in Gegenstromrichtung zu der Strömung im Messbetrieb durchströmt werden, d. h. mit umgekehrter Laufrichtung der Gasfördereinrichtung 56.

Zusammenfassend lassen sich mittels des erfindungsgemäßen Messsystems 1 und des Messbetriebs vorteilhaft äußerst reproduzierbare, robuste und effiziente Messungen an unterschiedlichen Fahrzeugen und/oder bei unterschiedlichen Randbedingungen durchführen, wobei das Messsystem 1 und/oder der Messbetrieb entsprechend auf die unterschiedlichen Gegebenheiten abgestimmt ist/s

## Patentansprüche

1. Messsystem (1) zur Ermittlung von Partikelemissionen, die von einem eine Radmittelachse (M) aufweisenden Fahrzeugrad (2) ausgehen, mit einer Messanordnung (5, 6) umfassend
- eine entlang einer Längsachse (L) verlaufende Sammelleitung (44) zur Leitung einer gesammelten Gasströmung an eine Probenentnahmevorrichtung (46),
- eine Kollektorvorrichtung (20) mit einem Strömungskanal (27) zur Sammlung und Überführung der Gasströmung aus einem Bereich an dem Fahrzeugrad (2) auf die Sammelleitung (44), mit einer Eintrittsöffnung (24) zur Ausrichtung in Richtung des Fahrzeugrades (2), mit einer sammelleitungsseitigen Austrittsöffnung (25), die vorzugsweise zumindest im Wesentlichen deckungsgleich mit einem Strömungsquerschnitt der Sammelleitung (44) an dieser, vorzugsweise lösbar, befestigbar oder befestigt ist, und mit einer untergrundseitigen Unterseite (17), und
- die Probenentnahmevorrichtung (46) umfassend zumindest eine Probenentnahmeleitung (51) und eine dieser zugeordneten Probenentnahmesonde (48) mit einer eintrittsseitigen Entnahmeöffnung (50) zur Probenentnahme aus der Gasströmung innerhalb der Sammelleitung (44) und zur Leitung der entnommenen Proben an eine Analyseanordnung (58),
**dadurch gekennzeichnet,**
**dass** die Kollektorvorrichtung (20) auf das Fahrzeugrad (2) abgestimmt ist, wobei die Eintrittsöffnung (24) eine Höhe (hb) aufweist, die mindestens 20 %, vorzugsweise mindestens 25 % einer Höhe (hd) des Fahrzeugrads (2) entspricht, wobei insbesondere die Höhe (hb) größer ist als eine Breite der Eintrittsöffnung (24),
wobei insbesondere die Kollektorvorrichtung (20) derart angeordnet ist, dass sich die Eintrittsöffnung (24) während der Messung in einem bezüglich einer Fahrzeugvorderseite radrückseitigen, untergrundseitigen Quadranten (Q2) des Fahrzeugrads (2) befindet, wobei sich die Kollektorvorrichtung (20) mit der Eintrittsöffnung (24) in Umlaufrichtung um die Radmittelachse (M) über einen Öffnungswinkel (α) erstreckt.

2. Messsystem (1) nach Anspruch 1,
**dadurch gekennzeichnet,**
**dass** ein Durchmesser (di) der Sammelleitung (44) zumindest 30 %, vorzugsweise zumindest 50 % der Höhe (hb) der Eintrittsöffnung (24) beträgt und/oder
**dass** innerhalb der Sammelleitung (44) ein freier Strömungsquerschnitt (An) im Bereich der zumindest einen Probenentnahmesonde (48) zumindest 50 % eines freien Strömungsquerschnitts (Ai) im Bereich stromauf der Probenentnahmesonde (48) beträgt.

3. Messsystem (1) nach Anspruch 1 oder 2,
**dadurch gekennzeichnet,**
**dass** die zumindest eine Probenentnahmeleitung (51)
- eine Leitungslänge von der Entnahmeöffnung (50) bis an die Analyseanordnung (58) von maximal 1 m und/oder
- einen Strömungsdurchmesser von mindestens 10 mm und vorzugsweise maximal 18 mm aufweist.

4. Messsystem (1) nach einem der vorhergehenden Ansprüche,
**dadurch gekennzeichnet,**
**dass** die zumindest eine Probenentnahmesonde (48), vorzugsweise eine Gruppe von Probenentnahmesonden (48), innerhalb der Sammelleitung (44) parallel zu der Längsachse (L) und/oder
in einem Querschnitt durch die Sammelleitung (44) symmetrisch zu der Längsachse (L) angeordnet ist.

5. Messsystem (1) nach einem der Ansprüche 2 bis 4,
**dadurch gekennzeichnet,**
**dass** die zumindest eine Entnahmeöffnung (50) in einer Messebene (53) angeordnet ist, die eine axiale Position bezüglich der Längsachse (L) mit einem Abstand von zumindest 1 x di, vorzugsweise zumindest 1,5 x di oder zumindest 2 x di, von der Austrittsöffnung (25) aufweist.

6. Messsystem (1) nach einem der vorhergehenden Ansprüche,
**dadurch gekennzeichnet,**
**dass** stromab der Entnahmeöffnung (50) eine Ableitung (45) von der Sammelleitung (44) abzweigt oder die Sammelleitung (44) in selbige übergeht, zur Abführung der restlichen Gasströmung nach Probenentnahme stromab der Entnahmeöffnung (50), wobei ein Umlenkwinkel einer Strömungsumlenkung (52) zwischen der Sammelleitung (44) und der Ableitung (45) z. B. zwischen 30° und 90° beträgt, und vorzugsweise im axialen Bereich der Strömungsumlenkung (52), z. B. über zumindest einen Großteil des Strömungsquerschnitts der Sammelleitung (44), ein Umlenkelement (55) angeordnet ist, welches auf der im Betrieb überströmten Seite eine an den Umlenkwinkel angepasste schräge und/oder gekrümmte Strömungsleitfläche (57) aufweist.

7. Messsystem (1) nach einem der vorhergehenden Ansprüche,
**dadurch gekennzeichnet,**
**dass** bei Vorhandensein mehrerer Probeentnahmesonden (48) die Entnahmeöffnungen (50)
- auf der gleichen axialen Position, bei Ausführung nach Anspruch 5 in der Messebene (53), angeordnet sind und/oder
- die Mittelpunkte unmittelbar zueinander benachbarter Entnahmeöffnungen (50) äquidistant zueinander angeordnet sind.

8. Messsystem (1) nach einem der vorhergehenden Ansprüche,
**dadurch gekennzeichnet,**
**dass** das Messsystem (1) das Fahrzeugrad (2) umfasst, wobei die Kollektorvorrichtung (20) einen radialen Abstand (s) von einer radial außenseitigen Lauffläche (4) des Fahrzeugrads (2) von 10 mm ≤ s ≤ 150 mm, vorzugsweise von 50 mm ≤ s ≤ 100 mm, z. B. 65 mm, aufweist und/oder
**dass** das Messsystem (1) eine Wärmeerfassungseinrichtung, insbesondere eine Wärmebildkamera, zur Erfassung eines Wärmebildes an dem Fahrzeugrad (2), aufweist.

9. Messsystem (1) nach einem der vorhergehenden Ansprüche,
**dadurch gekennzeichnet,**
**dass** die Kollektorvorrichtung (20) konisch und/oder strömungsgünstig geformt, mit insbesondere stetigen, abgerundeten Flächenverläufen und/oder ohne Strömungsablösungen induzierende Vorsprünge, ausgebildet ist, und/oder
**dass** ein Strömungskanal (27) der Kollektorvorrichtung (20) zumindest mit der Unterseite (17) in Strömungsrichtung schräg nach oben, von einem Untergrund (3) wegführend, ausgerichtet ist.

10. Messsystem (1) nach einem der vorhergehenden Ansprüche,
**dadurch gekennzeichnet,**
**dass** an der Unterseite (17) der Kollektorvorrichtung (20) ein Reservoir (28) angeordnet ist, welches vorzugsweise derart verschließbar ist, dass der Wandungsverlauf der Unterseite (17) zumindest im Wesentlichen stetig ist.

11. Messsystem (1) nach einem der vorhergehenden Ansprüche,
**dadurch gekennzeichnet,**
**dass** das Messsystem (1) eine Gasfördereinrichtung (56) zur Förderung der Gasströmung aufweist, die insbesondere stromab der Entnahmeöffnung (50) in der Ableitung (45) der Gasströmung nach der Probenentnahme angeordnet ist, wobei die Gasfördereinrichtung (56) auf eine Gasgeschwindigkeit innerhalb der Sammelleitung (44) oder einer damit in Zusammenhang stehenden Größe regelbar oder geregelt ist.

12. Messsystem (1) nach einem der vorhergehenden Ansprüche,
**dadurch gekennzeichnet,**
**dass** das Messsystem eine Einhausung (10) aufweist, an der die Kollektorvorrichtung (20), vorzugsweise lösbar, befestigt ist, wobei die Einhausung (10) in montiertem Zustand das Fahrzeugrad (2) und einen Sammelraum (15) weitgehend umschließt, aufweisend eine sich radial bezüglich der Radmittelachse (M) erstreckende, außenseitige Deckwandung (12) und eine sich an die Deckwandung (12) anschließende, in Umlaufrichtung um die Radmittelachse (M) verlaufende Umfangswandung (14),
wobei in der Umfangswandung (14) eine untergrundseitige Öffnung (18) angeordnet ist, durch welche das Fahrzeugrad (2) mit einem Untergrund (3) in Kontakt stehen kann, und
wobei in der Umfangswandung (14) eine Kollektoröffnung (19) vorhanden ist, durch welche die mit den Emissionen beladene Gasströmung aus dem Sammelraum (15) in die Kollektorvorrichtung (20) abführbar oder abgeführt ist, wobei die Eintrittsöffnung (24) über der Kollektoröffnung (19) befestigt ist und/oder vorzugsweise zumindest im Wesentlichen deckungsgleich mit der Kollektoröffnung (19) oder kleiner ausgebildet ist,
und **dass** insbesondere die Einhausung (14) derart ausgebildet ist,
**dass** die Umfangswandung (14) den radialen Abstand (s) von der radial außenseitigen Lauffläche (4) des Fahrzeugrads (2) mit 10 mm ≤ s ≤ 150 mm, vorzugsweise mit 50 mm ≤ s ≤ 100 mm, z. B. 65 mm, aufweist und/oder
**dass** an untergrundseitigen Enden der Einhausung (10), die die untergrundseitige Öffnung (18) umgrenzen, zumindest ein Endelement (40) lösbar befestigt oder befestigbar ist.

13. Messsystem (1) nach Anspruch 12,
**dadurch gekennzeichnet,**
**dass** an der Umfangswandung (14) weiterhin eine Adapteröffnung (30) angeordnet ist, die vorzugsweise in einem oberen, besonders bevorzugt einem bezüglich einer Fahrzeugvorderseite radvorderseitigen Quadranten (Q4) bezüglich der Radmittelachse (M) angeordnet ist, wobei insbesondere an der Adapteröffnung (30) eine Funktionseinheit (32) lösbar befestigbar oder befestigt ist, wobei die Funktionseinheit (32) aufweist oder gebildet ist durch zumindest: eine Gas-Zufuhrdüse (34), eine Partikel-Zugabevorrichtung und/oder eine Messeinrichtung und/oder die Wärmeerfassungseinrichtung.

14. Messsystem (1) nach einem der vorhergehenden Ansprüche,
**dadurch gekennzeichnet,**
**dass** sich die Eintrittsöffnung (24) und/oder die Kollektoröffnung (19) und/oder die Adapteröffnung (30) in axialer Richtung bezüglich der Radmittelachse (M) über mehr als 70 % der Breite, vorzugsweise zwischen 80 % bis 95 % der Breite der Umfangswandung (14) und/oder des Fahrzeugrads (2) erstreckt/erstrecken, und vorzugsweise zumindest im Wesentlichen viereckig ausgebildet ist/sind.

15. Messsystem (1) nach einem der Ansprüche 12 bis 14,
**dadurch gekennzeichnet,**
**dass** zwei Messanordnungen (5, 6) vorhanden sind, wobei eine der Messanordnungen (5) eine Einhausung (10) umfasst und die andere der Messanordnungen (6) keine Einhausung (10) umfasst, mittels welcher der gleiche Messbetrieb durchführbar oder durchgeführt ist, wobei vorzugsweise beide Messanordnungen (5, 6) in demselben Messbetrieb simultan, jeweils eine an einem der Fahrzeugräder (2) insbesondere desselben Fahrzeuges, einsetzbar oder eingesetzt sind.

16. Messsystem (1) nach einem der vorhergehenden Ansprüche,
**dadurch gekennzeichnet,**
**dass** zumindest während des Messbetriebs mit der Gasströmung in Kontakt stehende Wandflächen aus elektrisch leitfähigem Material, insbesondere Metall und/oder elektrisch leitfähigem Kunststoff, ausgebildet sind.

17. Verfahren zur Ermittlung von Partikelemissionen, die von einem Fahrzeugrad (2) ausgehen, bei dem in einem Messbetrieb die Partikelemissionen mittels zumindest einer Messanordnung (5, 6) eines Messsystems (1), das nach einem der vorhergehenden Ansprüche ausgebildet ist, ermittelt werden, wobei in zumindest einem Fahrzyklus das Fahrzeugrad (2) auf einem Untergrund (3) abrollt, wobei aus einem Bereich an dem Fahrzeugrad (2) eine Gasströmung mittels einer Kollektorvorrichtung (20) gesammelt, insbesondere angesaugt, wird und in eine Sammelleitung (44) überführt wird, wobei innerhalb der Sammelleitung (44) mittels zumindest einer Probenentnahmesonde (48) eine Probe aus der Gasströmung entnommen und an eine Analyseanordnung (58) geleitet wird, wobei insbesondere innerhalb eines Messbetriebs mehrere, vorzugsweise mindestens fünf, z. B. acht, Fahrzyklen hintereinander durchgeführt werden, wobei vorzugsweise als Startbedingung für einen einzelnen Fahrzyklus eine Temperatur des Fahrzeugrades (2) eine definierte Starttemperatur unterschreitet.

18. Verfahren nach Anspruch 17,
**dadurch gekennzeichnet,**
**dass** der Messbetrieb unter kontrollierten Umgebungsbedingungen, vorzugsweise auf einem Prüfstand in einer Klimakammer, durchgeführt wird,
- bei einer definierten Temperatur, die insbesondere zwischen 18 °C und 28 °C, vorzugsweise zwischen 22 °C und 24 °C, beträgt und/oder
- bei einer definierten Luftfeuchtigkeit, die insbesondere zwischen 40 % und 60 %, vorzugsweise zwischen 48 % und 52 %, beträgt und/oder
- bei einem definierten Maximalpartikelgehalt der Umgebungsluft, der insbesondere maximal 600 Partikel pro cm³, vorzugsweise maximal 300 Partikel pro cm³ beträgt und/oder
**dass** der Messbetrieb auf einer definierten Oberfläche eines Untergrundes, insbesondere einer Rolle eines Rollenprüfstandes, durchgeführt wird.

19. Verfahren nach Anspruch 17 oder 18,
**dadurch gekennzeichnet,**
**dass** simultan während des Messbetriebs und/oder in einem separaten Charakterisierungsbetrieb, vorzugsweise unter den gleichen Randbedingungen, eine Hintergrundpartikelkonzentration und/oder eine Partikelanzahl und/oder eine Partikelsammlungs- und/oder -transporteffizienz und/oder eine Verdünnung und/oder zumindest eine Temperatur des Fahrzeugrades (2) ermittelt wird/werden und/oder in dem Messbetrieb die Masse der Partikel, insbesondere Feinstaub der Kategorisierung PM1, PM2,5, PM10, und/oder die Anzahl der Partikel, vorzugsweise mit einer Größe von 7 nm bis 2 µm sowie einer Größe von 300 nm bis 10 µm insbesondere simultan bestimmt wird/werden und/oder dass nach dem Messbetrieb eine Offline-Charakterisierung von Partikelproben durchgeführt wird.

20. Verfahren nach einem der Ansprüche 17 bis 19,
**dadurch gekennzeichnet,**
**dass** vor und/oder nach dem Messbetrieb
- die Oberfläche des Fahrzeugrades (2) kontrolliert wird, wobei ein Profil, insbesondere mittels eines Profilometers, ermittelt wird und/oder eine mikroskopische und/oder eine makroskopische Oberfläche z. B. mittels eines Lasers hinsichtlich der Stabilität überprüft wird, und/oder
- das Gewicht des Fahrzeugrads (2), vorzugsweise mehrere Male, z. B. mindestens sieben Mal, ermittelt wird, wobei insbesondere vor der Gewichtsermittlung nach dem Messbetrieb das Fahrzeugrad (2) definiert gereinigt wird und bei der Reinigung sich lösende Partikel als Partikelemissionen berücksichtigt werden und/oder
**dass** das Messsystem (1) nach dem Messbetrieb definiert gereinigt wird, wobei die Strömungswege zumindest abschnittsweise für eine vorbestimmt Zeitspanne, z. B. zwischen 5 und 15 Minuten, mittels eines definierten Luftvolumenstroms an gefilterter Luft, vorzugsweise in Gegenstromrichtung zu der Strömung im Messbetrieb, durchströmt werden.
